# FASCICULE DE BREVET EUROPEEN

(11) **EP 1 467 571 B1**
(45) Date de publication et mention de la délivrance du brevet: **24.08.2011**
(21) Numéro de dépôt: 04290937.4
(22) Date de dépôt: 08.04.2004
(51) Int. Cl.: H04N 9/12, H04N 5/64

(54) **Dispositif d'intégration de moniteurs dans des structures de monitorage**
Vorrichtung zur Integration von Monitoren in Überwachungsstrukturen
Device for integrating of monitors in monitoring structures

(30) Priorité: 08.04.2003 FR 0304329
(43) Date de publication de la demande: 13.10.2004
(73) Titulaire: Systel Electronique, 71390 Cersot (FR)
(72) Inventeur: Escalle, Frédéric, 71460 Bissy sur Fley (FR)
(74) Mandataire: Oudin, Stéphane

(56) Documents cités:
- EP-A- 1 173 030
- WO-A-98/27726
- DE-U- 8 911 547
- FR-A- 2 749 693
- JP-A- 2002 374 079
- US-A- 5 249 005
- US-A- 5 303 057
- US-A- 5 512 968
- US-A1- 2002 180 661
- US-A1- 2003 063 227
- GENERAL TECHNICS: "Rugged Rackmount CRT Monitors" INTERNET CITATION, [Online] 24 February 2003 (2003-02-24), pages 1-2, XP007909076 Retrieved from the Internet: URL:http://web.archive.org/web/20030224120 901/http://gtweb.net/rackmonitor-crt.html> [retrieved on 2009-07-03]
- INTERNET CITATION: "CS421-side" , [Online] 7 August 2002 (2002-08-07), page 1, XP007909077 Retrieved from the Internet: URL:http://web.archive.org/web/20020807191 344/gtweb.net/images/cs421-side.jp> [retrieved on 2009-07-03]
- INTERNET CITATION: "cs421-rear" , [Online] 27 January 2003 (2003-01-27), page 1, XP007909078 Retrieved from the Internet: URL:http://web.archive.org/web/20030127195 347/gtweb.net/images/cs421-rear.jp> [retrieved on 2009-07-03]
- INTERNET CITATION: "CS421-top" , [Online] 8 July 2002 (2002-07-08), page 1, XP007909079 Retrieved from the Internet: URL:http://web.archive.org/web/20020807191 308/gtweb.net/images/cs421-top.jpg> [retrieved on 2009-07-03]
- GENERAL TECHNICS: "dim-cs428" INTERNET CITATION, [Online] 24 February 2003 (2003-02-24), pages 1-2, XP007909080 Retrieved from the Internet: URL:http://web.archive.org/web/20030224131 015/gtweb.net/dim-cs428.html> [retrieved on 2009-07-03]
- INTERNET CITATION: "Rackmount Computer Components" , [Online] 2 April 2003 (2003-04-02), XP007909035 Retrieved from the Internet: URL:http://web.archive.org/web/20030402091 841/www.hometech.com/rack/rackcomp.html> [retrieved on 2009-07-02]
- VON ELM D.: "Allgemeine Verwaltungsvorschrift zur Kennzeichnung von Luftfahrthindernissen" LUFTRECHT ONLINE, 1 December 2007 (2007-12-01), pages 1-23, XP007909067
- HI-IO PRODUCTS: "Q-1550a-RK" INTERNET CITATION, [Online] 7 February 2003 (2003-02-07), page 1, XP007909072 Retrieved from the Internet: URL:http://web.archive.org/web/20030207161 437/http://flatmonitors.com/Q1500ARK.doc> [retrieved on 2009-07-03]
- INTERNET CITATION: "Q-1500B-RKfront" , [Online] 17 October 2002 (2002-10-17), page 1, XP007909073 Retrieved from the Internet: URL:http://web.archive.org/web/20021017142 843/flatmonitors.com/Q-1500B-RKfront1.jpg> [retrieved on 2009-07-03]
- HI-IQ PRODUCTS: "Q-1500A-RK" INTERNET CITATION, [Online] 17 October 2002 (2002-10-17), page 1, XP007909074 Retrieved from the Internet: URL:http://web.archive.org/web/20021017143 505/flatmonitors.com/Q-1500B-RKrear1.jpg> [retrieved on 2009-07-03]
- HI-IQ PRODUCTS: "Q-1500C-RK" INTERNET CITATION, [Online] 10 June 2002 (2002-06-10), page 1, XP007909075 Retrieved from the Internet: URL:http://web.archive.org/web/20020610081 825/http://www.flatmonitors.com/Q-1500C-RK .doc> [retrieved on 2009-07-03]

## Description

La présente invention concerne le domaine du monitorage industriel et a pour objet un dispositif d'intégration de moniteurs dans les structures de monitorage préexistantes, destiné notamment aux pupitres ou panneaux de surveillance pour commande ou vue d'ensemble centralisée.

Les systèmes de contrôle à distance sont employés dans les unités de production d'électricité, de produits chimiques ou de procédés agroalimentaires, les centres de gestion et de contrôle du trafic ferroviaire, etc.

Dans le cas particulier des centres nucléaires de production d'électricité (CNPE), ces systèmes de monitorage ont été conçus il y a maintenant plus d'une trentaine d'années et les plus anciens ont passé les vingt ans d'exploitation. L'évolution technologique et le vieillissement des moniteurs posent aujourd'hui le problème de leur renouvellement. La principale difficulté, en dehors des évolutions de standards électriques et/ou électroniques, réside en ce que les moniteurs de ces pupitres ou panneaux sont intégrés dans des structures porteuses répondant à des normes spécifiques, antisismiques notamment, et dont le remplacement ou la modification dimensionnelle génèrerait des coûts et des travaux importants que l'on souhaite éviter.

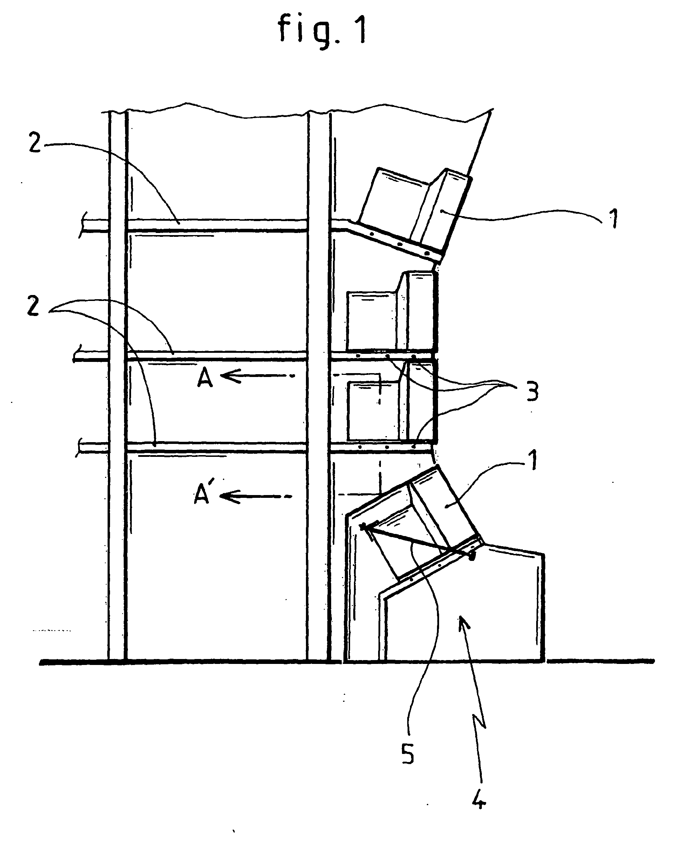

En outre, comme on peut le constater sur la figure 1, qui sera commentée plus en détail par la suite, ces structures porteuses sont généralement tubulaires et présentent des longerons, habituellement des cornières formant rails dans lesquels les moniteurs sont placés, qui peuvent porter le moniteur en dévers et il est donc impératif que celui-ci ne tombe pas, que ce soit sur les observateurs ou au fond du pupitre. Une difficulté supplémentaire provient de ce que l'accès est prévu dans l'axe longitudinal avec une introduction par l'arrière, tandis que l'accès latéral est aujourd'hui rendu très difficile voire inaccessible du fait de la constitution de « murs d'écrans » et de la présence d'autres appareils électroniques, fixés eux aussi sur les structures porteuses.

D'autre système, communément appelés armoires à rack proposent des structures portantes, tubulaires ou non, aptes à recevoir des rack formés de tôles solidarisées entre-elles pour former des caissons ouverts sur le dessus et dans lesquels les moniteurs sont posés et/ou fixés. Différentes sortes de racks sont commercialisés. On connaît par exemple les produits suivants :
- « Industrial Style Rack Mount Computers » commercialisé par la société General Technics Industrial Rackmount Computers,
- « Rackmount Computer Components » commercialisé par la société Hometech
- Ces racks sont souvent pourvus, sur leur face avant, de poignées facilitant leur manipulation et leur insertion dans les logements définis par l'ossature tubulaire.
On connaît également les produits « HI-IQ Products » commercialisés par la société PeiZen Inc qui propose des moniteurs encastrés dans des platines destinées à être insérés dans une structure porteuse tubulaire sur la face avant de laquelle ils sont fixés.

On connaît également le document JP2002-374079 qui décrit une salle de commande, par exemple pour centre de sécurité, comportant des écrans de moniteurs agencés pour pouvoir être disposés de manière optimale et d'autoriser leur réarrangement. La salle de commande comporte des modules de base supportant des modules de stockage. Selon les besoins, les modules de base et de stockage sont disposés en arc de cercle, en ligne droite ou en U. Les modules de base et de stockage sont pourvus, sur leurs faces latérales de profilés pourvus d'une multitude d'orifices permettant de solidariser les modules entre eux. Les modules de stockage sont chacun pourvus d'une étagère inclinée permettant de présenter l'écran du moniteur avec un certain angle d'inclinaison. Les modules de stockage destinés à recevoir des écrans de faibles épaisseurs sont pourvus de barres transversales arrières couplées à des vis de fixation pour solidariser les écrans aux barres transversales. Les barres transversales sont reliées entre-elles par des barres de connections. Les modules de base servent de support à une table et sont pourvus de moyens de levage Les modules de stockage peuvent être pourvus de couvercle transparents escamotables. L'emplacement des modules peut être changé à volonté.

Ces différents dispositifs présentent généralement l'inconvénient de nécessiter une fixation par la paroi avant du moniteur. Or, à l'heure actuelle, devant les difficultés d'accès et d'encombrement spatial des structures porteuses, les moniteurs ne sont plus fixés aux structures et les plaques avant du panneau de contrôle servent bien souvent de butée aux moniteurs. Les normes en matière de tenue et de fixation, notamment en cas de séisme, ne sont donc plus respectées.

Ce problème de remplacement du matériel de monitorage sans modifier les structures support existantes est aussi transposable par exemple dans le domaine ferroviaire, ou pour des installations industrielles plus récentes, pour lesquelles la question se posera dans les années à venir.

La présente invention vise donc à remédier à ces problèmes en proposant un dispositif d'intégration et de solidarisation de moniteurs dans ces structures préexistantes de pupitres ou panneaux de surveillance répondant aux normes en matière de tenue et de fixation, notamment en cas de séisme.

A cet égard, ce dispositif est remarquable en ce qu'il consiste en un châssis intermédiaire tubulaire, de forme globalement parallélépipédique rectangle, muni de moyens de liaison d'un moniteur audit châssis et de moyens de fixation à la structure porteuse, les premiers assurant la solidarisation du moniteur et les seconds évitant tout risque de chute de l'ensemble solidarisé châssis-moniteur le châssis comportant au moins une traverse additionnelle inférieure comportant au moins deux passages de vis verticaux pour la fixation du châssis sur la structure porteuse, et en ce que lesdits moyens de fixation sont des moyens de pincement des éléments de la structure porteuse, ce pincement étant effectué entre les traverses additionnelles inférieures et une pièce de serrage.

On comprend bien que ce dispositif permet de s'adapter à toutes les dimensions de structures porteuses existantes, ainsi qu'à celles d'écrans commercialisés actuellement ou à l'avenir, puisque l'utilisation d'une structure intermédiaire permet de dissocier d'une part les moyens de fixation du moniteur à cette structure et d'autre part les moyens de fixation de la structure intermédiaire à la structure porteuse, d'où une grande adaptabilité aux diverses combinaisons de formats possibles. En outre, on notera que le problème de la fixation ferme et sûre des nouveaux moniteurs est ainsi résolu.

D'autres avantages et caractéristiques ressortiront mieux de la description qui va suivre de plusieurs variantes d'exécution, données à titre d'exemples non limitatifs, du dispositif d'intégration conforme à l'invention, en référence aux dessins annexés sur lesquels :
- la figure 1 est une vue schématique en coupe transversale d'un panneau de contrôle tel qu'existant dans une salle de commande à distance d'un centre nucléaire de production d'électricité ;
- la figure 2 est une vue en élévation et en perspective du châssis adapté notamment pour un moniteur à tube cathodique classique ;
- la figure 3 est une vue en élévation et en perspective du châssis adapté pour un moniteur "plat", à écran à cristaux liquides ou plasma ;
- la figure 4 est une vue en élévation et en perspective des moyens de liaison d'un moniteur à écran à cristaux liquides ou plasma au châssis représenté sur la figure 3 ;
- la figure 5 est une vue partielle et en coupe selon l'axe AA', représenté sur la figure 1, d'un châssis selon l'invention fixé à une structure porteuse du type rail en cornière.

En référence à la figure 1, les moniteurs 1 du panneau de contrôle sont portés et fixés sur des longerons métalliques 2 en forme de cornières formant un rail. L'aile horizontale de ces cornières sert de support à la paroi inférieure du boîtier des moniteurs, tandis que l'aile verticale de ces longerons est, à la hauteur de l'emplacement des moniteurs, régulièrement percée de passages de vis 3 pour la fixation des moniteurs. Les panneaux de contrôle constitutifs de telles salles de commande se présentent sous la forme de rangées verticales juxtaposées qui ont été montées au fur et à mesure, chaque rangée de rails étant fixée après que les moniteurs ou autre appareillage de la rangée précédente aient été mis en place. Ainsi, l'accès latéral a été supprimé, la seule voie d'accès possible se faisant par l'arrière. Dans le cas des moniteurs fixés en bas de panneau ou dans des pupitres de contrôle 4, les moniteurs à tube cathodique classique sont maintenus en inclinaison négative, c'est-à-dire du haut vers le bas et de l'avant vers l'arrière, par l'intermédiaire de tirants de fixation 5 placés au niveau de l'angle supérieur de la partie arrière des moniteurs. On comprend bien que ce dernier système est mal adapté au blocage de moniteurs plats à écran à cristaux liquides (LCD) ou plasma.

On comprend mieux maintenant les difficultés liées au remplacement de ces moniteurs intégrés dans ces structures porteuses particulières.

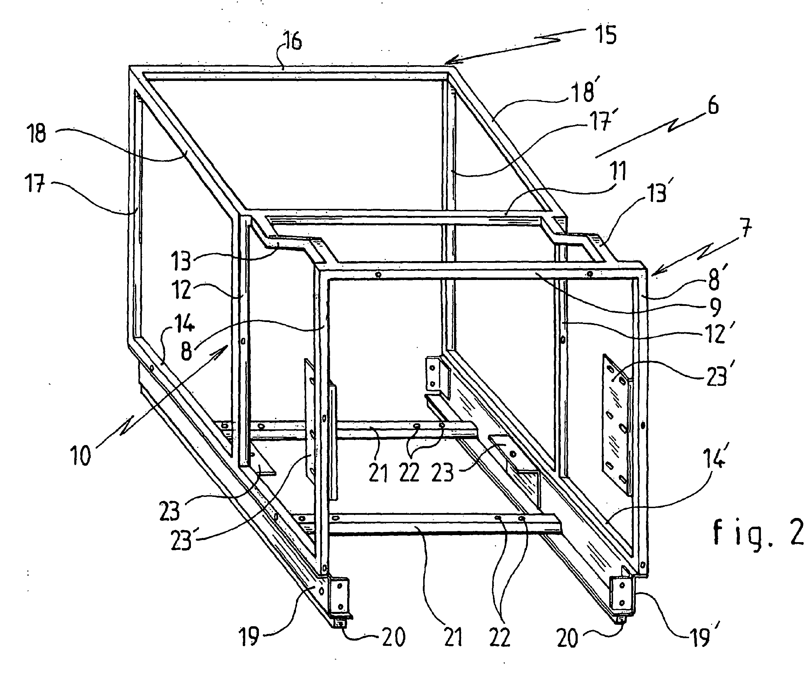

Sur la figure 2 qui représente une variante d'exécution du dispositif d'intégration selon l'invention, notamment adaptée pour des moniteurs dotés d'un écran à tube cathodique classique, le châssis 6 est un châssis tubulaire, de forme globalement parallélépipédique rectangle, constitué de l'assemblage de plusieurs cadres entre-eux. Les matériaux utilisés pour fabriquer les tubes sont choisis de telle manière qu'ils puissent former un châssis matériellement rigide et ayant un degré de résistance suffisant pour l'usage prévu, à savoir le support d'un moniteur et la fixation du châssis sur une autre structure. On emploiera de préférence des tubes métalliques enrobés, peints, vernis ou non. Par exemple, on pourra utiliser, comme dans l'exemple décrit ci-après, des tubes de section carrée de 16 mm de côté et 1,5 mm d'épaisseur en acier inoxydable. De l'avant vers l'arrière, on a ainsi un premier cadre 7 comportant deux montants 8,8' et une traverse supérieure 9. Ce premier cadre 7 qui ne comporte pas de traverse inférieure est relié à un second cadre 10 qui ne comporte pas non plus de traverse inférieure. Ce cadre 10 comporte une traverse supérieure 11 et deux montants latéraux 12,12'. Les cadres 7 et 10 sont reliés entre eux par deux paires de longerons. Les longerons supérieurs 13,13' ont une forme épousant le profil supérieur des moniteurs à tube cathodique, c'est à dire qu'ils sont divisés en segments successifs, par exemple trois, permettant d'épouser la courbe de la partie supérieure d'un tel moniteur. Les longerons inférieurs 14,14' sont, quant à eux, rectilignes et relient également les cadres 7 et 10 au dernier cadre 15 situé à l'arrière. Le cadre 15 lui non plus ne comporte pas de traverse inférieure et est donc doté d'une traverse supérieure 16 et de deux montants latéraux 17,17'. Les deux traverses supérieures 10 et 16 sont reliées entre elles par des longerons droits 18 et 18'. Sous la face inférieure des longerons inférieurs 14 et 14', on fixe une cornière de section en Z droit 19,19' ; cette cornière déborde vers l'intérieur du châssis. La forme et l'écartement de ces cornières 19,19' correspondent à ceux des rails des structures de support et permettent un emboîtement dans ceux-ci afin de former une glissière. Les cornières 19,19' en Z droit sont réalisées dans un matériau identique à celui des tubes.

Selon une caractéristique de l'invention, ces cornières 19,19' sont dotées sous leur segment inférieur de patins 20 longitudinaux courant sur toute leur longueur et ayant pour but de faciliter l'introduction et le glissement des châssis 6 sur les structures porteuses en forme de rail. Ces patins 20 sont réalisés en une matière polymère organique plastique, par exemple du PVC, assurant un coefficient de glissement suffisant tout en offrant une certaine élasticité permettant de les compresser lors de la fixation du châssis 6 sur les longerons 2 de la structure porteuse.

Selon une caractéristique essentielle de l'invention, le châssis 6 comporte deux traverses additionnelles inférieures 21 destinée à la fixation du châssis sur les longerons 2 de la structure porteuse. Ces traverses sont fixées sur les cornières en Z droit 19,19'. Chacune des traverses comporte au moins deux passages de vis 22, réalisés dans la direction verticale.

Bien entendu, le châssis pourra comporter d'autres traverses, montants ou longerons supplémentaires afin de rigidifier la structure.

Il va de soi que les dimensions du châssis 6 seront adaptées aux dimensions du creux dans lequel le moniteur pourra être encastré avec le châssis au sein de la structure porteuse. Ainsi, et à titre d'exemple non limitatif, le châssis décrit aura des dimensions extérieures de 470 x 440 x 480 mm(longueur x hauteur x profondeur), avec un écartement des cornières 19,19' de 428 mm, dans le cas d'une structure porteuse dont les rails sont écartés de 45 cm.

Selon une autre caractéristique essentielle de l'invention, le châssis comporte des moyens de liaison du moniteur 1 au châssis 6. Ces moyens consistent en des profilés 23,23' en forme d'équerre. Ces profilés se répartissent en profilés de support 23 et profilés de fixation 23'. Les profilés de support 23 sont au nombre de deux et sont destinés à servir d'appui à la face inférieure du boîtier d'un moniteur à tube cathodique classique. Les profilés 23 sont fixés, à la distance adéquate, sur la section verticale intérieure des cornières 19,19' en Z droit, de telle sorte qu'une des branches soit plaquée contre la cornière et que l'autre branche du profilé 23 serve d'appui horizontal à la face inférieure du boîtier du moniteur. Les profilés 23' de fixation sont des équerres qui sont fixées aux montants 8,8', de telle sorte que l'une des faces de l'équerre soit parallèle aux flancs latéraux du châssis. Cette face comporte des passages de vis qui permettent d'assujettir latéralement le boîtier du moniteur au châssis. On comprend bien que les moyens de liaison au moniteur consistant en des profilés 23,23' peuvent facilement être adaptés à tous les formats de moniteurs fabriqués, de 5" à 20". Il va de soi que l'utilisation d'un jeu de pièces interchangeables en fonction des moniteurs que l'on veut fixer sur un châssis de taille unique est à la portée de l'Homme du Métier.

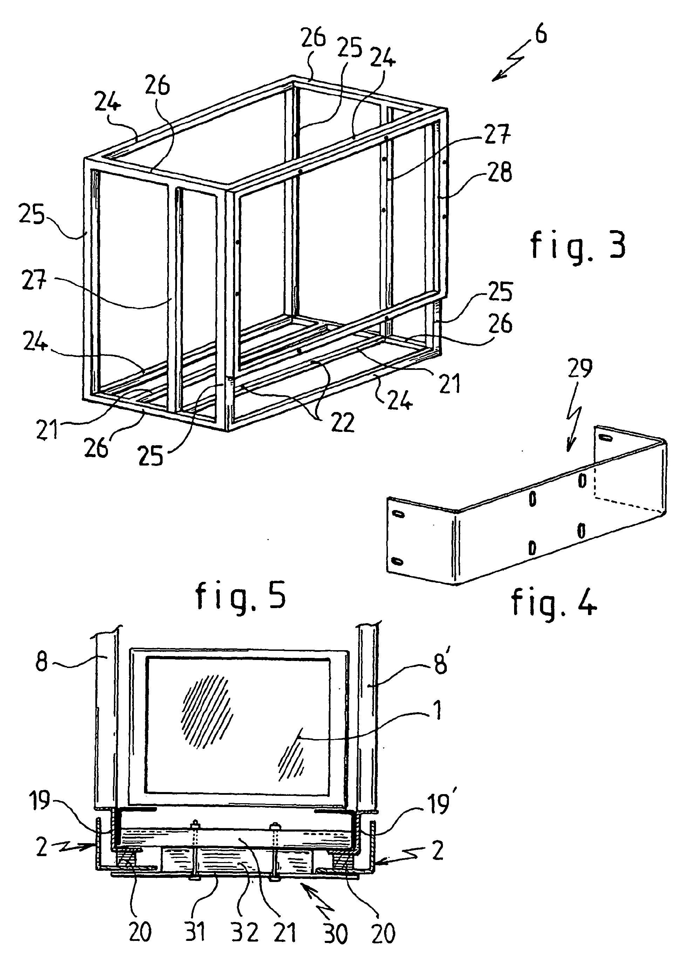

La figure 3 décrit une variante du dispositif selon l'invention, adaptée à l'intégration et la fixation de moniteurs comportant un écran LCD ou plasma. Ces moniteurs sont caractérisés en ce qu'ils ont une forme parallélépipédique rectangle de faible profondeur. Le châssis 6 est de forme parallélépipédique rectangle parfaite. Il correspond à l'assemblage de cadres tubulaires et comporte donc quatre traverses 24, quatre montants 25 et quatre longerons 26. Il comporte en outre deux montants additionnels 27 placés, un de chaque côté, ainsi qu'un cadre additionnel 28 fixé sur les montants avants 26 et la traverse supérieure avant 24. Appliqué à une structure porteuse dont l'écartement des rails est de 450 mm, le châssis constitué de tubes de section carrée de 15 mm et d'épaisseur 1,5 mm, aura pour dimensions extérieures 428 x 420 x 235 mm.

Selon une caractéristique essentielle de l'invention, le châssis 6 comporte également deux traverses inférieures additionnelles 21, lesquelles traverses sont percées de passage de vis 22 verticaux. Les traverses additionnelles sont régulièrement réparties entre les deux traverses inférieures 24. En outre, les montants additionnels 27 sont dotés de passages de vis horizontaux pour accueillir les moyens de liaison d'un moniteur LCD au châssis.

La figure 4 représente justement les moyens de liaison mis en oeuvre pour fixer un moniteur à écran LCD ou plasma au châssis adapté à ce type de moniteur, représenté sur la figure 3. Il s'agit d'un profilé 29 en forme de U dont les branches latérales sont perpendiculaires au segment médian. Ce segment médian est vissé au centre de la plaque arrière du moniteur 1 et ses branches comportent des passages de vis afin d'assurer l'assujettissement du moniteur 1, sur lequel a été fixé le profilé 29, aux montants additionnels 27 du châssis ; ceux-ci comportent les passages de vis adéquats permettant de boulonner ou visser le profilé 29, porteur du moniteur 1, au châssis d'intégration 6. Dans le cas des dimensions indiquées précédemment pour le châssis représenté sur la figure 3, le profilé 29 en forme de U est une plaque de 125 mm de large et 3 mm d'épaisseur, les deux branches latérales ayant une longueur de 104 mm, tandis que le segment médian a une longueur de 394 mm.

La figure 5 est une vue de face de la partie inférieure d'un châssis 6 dans sa variante adaptée à un moniteur à tube cathodique classique, tel que représenté sur la figure 2, positionné sur les longerons métalliques 2 de la structure porteuse de la salle de commande.

Selon une autre caractéristique essentielle de l'invention, les moyens de fixation sont des moyens de pincement des éléments de la structure porteuse. Ce pincement est effectué entre les traverses additionnelles inférieures 21 et une pièce de serrage 30. Cette pièce de serrage 30 est constituée d'une plaque 31 rectangulaire, surmontée d'un profilé creux en U 32, de même largeur que la plaque 31, et de longueur proche des 3/4 de la longueur de ladite plaque 31 sur laquelle il est assujetti de façon centrée. La pièce de serrage 30 est percée de passages de vis aux dimensions et écartements correspondants à ceux pratiqués dans les traverses inférieures 21. La longueur de la plaque 31 est déterminée de telle sorte qu'il y ait une emprise optimale et suffisante sur la section horizontale des longerons 2 métalliques de la structure de support. Pour les exemples de dimensions donnés précédemment, la plaque 31 fait 440 mm de long par 30 mm de large, l'épaisseur étant de 4 mm ; le profilé creux 32 en U fait 355 mm de long pour 30 mm de large pour la partie médiane, les deux côtés du U ayant 18 mm de hauteur, le matériau utilisé ayant dans l'exemple 3 mm d'épaisseur. Bien entendu, le profilé creux en U 32 peut être réalisé dans un matériau différent de la plaque 31, par exemple, dans un matériau plus compressible permettant d'obtenir un serrage optimal, qui compenserait les éventuels jeux dimensionnels résiduels. Il va de soi en outre que le profilé creux 32 en U peut aisément être remplacé par tout moyen fonctionnellement équivalent connu de l'homme du métier, par exemple un bloc parallélépipédique en matière polymère organique compressible.

Selon une dernière caractéristique du dispositif selon l'invention, celui-ci peut accueillir, en sus du moniteur, des dispositifs d'adaptation électronique divers, notamment du type convertisseur de fréquences. Ce, dans le but de réduire simultanément l'encombrement des structures porteuses.

Il est bien évident que l'on peut concevoir un dispositif d'intégration selon l'invention consistant en un châssis "universel" permettant d'accueillir indifféremment des moniteurs à tube classique ou à écran LCD, les moyens de liaison étant mis en adéquation. Un tel dispositif "universel" qui, par exemple pourra être celui présenté sur la figure 2, a l'avantage de ne nécessiter qu'une seule validation normative qui sera valable quel que soit le type d'écran installé.

Il va également de soi que les longerons, montants et traverses de châssis pourraient, sans sortir du cadre de l'invention, être non tubulaires et consister en des profilés de section en L ou en T, par exemple. En outre, on comprend bien que la modularité offerte par le dispositif d'intégration selon l'invention permet de procéder facilement et à moindre coût au renouvellement des moniteurs liés audit dispositif.

Bien sûr, les châssis selon l'invention peuvent être habillés, par la fixation de panneaux sur les côtés extérieurs des châssis, et être munis de poignées de transports. On pourra avantageusement munir le dispositif d'intégration sur sa face avant d'un masque, couramment dénommé plastron, et d'une casquette. Le masque consiste en un panneau aux dimensions de la face avant du châssis, lequel panneau est découpé d'une ouverture rectangulaire aux positionnement et dimensions en adéquation avec ceux de l'écran du moniteur solidarisé. Ce masque permet d'assurer une fermeture esthétique parfaite à la fois de la face avant du châssis et de l'orifice dans lequel ledit châssis est intégré, en supprimant optionnellement l'accès direct à la façade du moniteur solidarisé au châssis. Bien évidemment, l'ouverture centrale du masque peut être obturée par un panneau transparent, en plexiglas par exemple, afin de protéger l'écran du moniteur. La casquette quant à elle permet de réduire la gêne visuelle provoquée par la réverbération lumineuse sur la surface de l'écran.

Enfin, il va de soi que le dispositif d'intégration consistant en un châssis, peut être utilisé dans d'autres applications, par exemple, l'intégration dans des systèmes mobiles dans lesquels les moniteurs doivent être protégés au maximum des agressions extérieures ou encore, pour une utilisation en cage de Faraday afin d'isoler les moniteurs de perturbations électromagnétiques.

Enfin, il est clair que les exemples décrits ne sont que des illustrations particulières, en aucun cas limitatives des domaines d'application de l'invention.

## Revendications

1. Dispositif d'intégration de moniteurs (1) dans des structures porteuses préexistantes de pupitres ou panneaux de salles de contrôle ou de commande, **caractérisé en ce qu'**il consiste en un châssis intermédiaire (6), tubulaire, de forme globalement parallélépipédique rectangle, muni de moyens de liaison d'un moniteur (1) audit châssis (6) et de moyens de fixation à la structure porteuse, les premiers assurant la solidarisation du moniteur et les seconds évitant tout mouvement et risque de chute de l'ensemble solidarisé châssis-moniteur, ledit châssis comportant au moins une traverse additionnelle inférieure (21) comportant au moins deux passages de vis (22) verticaux pour la fixation du châssis (6) sur la structure porteuse, et **en ce que** lesdits moyens de fixation sont des moyens de pincement des éléments de la structure porteuse, ce pincement étant effectué entre la ou les traverse(s) additionnelle(s) inférieure(s) (21) et une pièce de serrage (30).

2. Dispositif selon la revendication 1, **caractérisé en ce que** ledit châssis (6) est un assemblage parallélépipédique rectangle de plusieurs cadres (7,10,15).

3. Dispositif selon la revendication 2, **caractérisé en ce que** ledit châssis (6) comporte un premier cadre (7) comportant deux montants (8,8') et une traverse supérieure (9), ledit premier cadre (7) ne comportant pas de traverse inférieure et étant relié à un second cadre (10) ne comporte pas non plus de traverse inférieure, ledit second cadre (10) comporte une traverse supérieure (11) et deux montants latéraux (12,12'), lesdits cadres (7, 10) étant reliés entre eux par une paire de longerons supérieurs (13,13') et une paire de longerons inférieurs (14,14').

4. Dispositif selon la revendication 3, **caractérisé en ce que** ledit châssis (6) comporte un cadre (15) situé à l'arrière desdits cadres (7, 10), ne comportant pas de traverse inférieure et doté d'une traverse supérieure (16) et de deux montants latéraux (17,17'), lesdites traverses supérieures (10, 16) étant reliées entre elles par des longerons droits (18 et 18').

5. Dispositif selon l'une quelconque des revendications 1 à 4 **caractérisé en ce que** ladite pièce de serrage (30) est constituée d'une plaque (31) surmontée d'un profilé creux en U (32), la longueur de la plaque (31) est telle qu'il y ait une emprise optimale et suffisante sur la section horizontale des éléments de la structure porteuse et **en ce que** la pièce de serrage (30) est percée de passages de vis verticaux dont les dimensions et l'écartement coïncident avec ceux pratiqués dans les traverses inférieures additionnelles (21) du châssis (6).

6. Dispositif selon l'une quelconque des revendications 1 à 5 **caractérisé en ce que** le châssis (6) est muni de moyens facilitateurs de l'insertion de l'ensemble châssis-moniteur sur les éléments (2) de la structure porteuse de l'unité de contrôle ou de commande, lesdits moyens facilitateurs consistent en des patins (20) en matière polymère organique plastique, par exemple du PVC, lesquels patins (20) sont placés sous les longerons inférieurs (14,14',26) du châssis ou sous les cornières en Z droit (19,19') fixées sous ces mêmes longerons inférieurs (14,14',26).

7. Dispositif selon l'une quelconque des revendications 1 à 6 **caractérisé en ce que** les moyens de liaison d'un moniteur (1) à tube cathodique au châssis (6) comportent des profilés de support (23) soutenant la face inférieure des boîtiers du moniteur (1) et des profilés de fixation (23') destinés à assujettir latéralement le moniteur (1) au châssis (6).

8. Dispositif selon l'une quelconque des revendications 1 à 6 **caractérisé en ce que** les moyens de liaison au châssis (6) d'un moniteur (1) à écran à cristaux liquides ou plasma consistent en un profilé (29) en forme de U dont les branches latérales sont perpendiculaires au segment médian, ce dernier étant destiné à être vissé au centre de la plaque arrière du moniteur et chacune des branches latérales étant destinées à être assujettie à un montant latéral additionnel (27) du châssis (6).

9. Dispositif selon l'une quelconque des revendications 1 à 8 **caractérisé en ce que** le châssis accueille en sus du moniteur, des dispositifs d'adaptation électronique.

## Claims

1. Device for integrating monitors (1) into preexisting supporting structures of consoles or panels in control rooms, **characterised in that** it consists of an intermediate chassis (6), tubular, of an overall rectangular parallelepiped shape, provided with means for connecting a monitor (1) to said chassis (6) and means for fastening to said supporting structure, the first providing the fastening of the monitor and the second preventing any movement and risk of falling of the fastened chassis-monitor unit, said chassis comprising at least one additional lower cross-member (21) comprising at least two vertical screw holes (22) for the fastening of the chassis (6) on the supporting structure, and **in that** said means for fastening are means for pinching elements of the supporting structure, this pinching being carried out between the additional lower cross-member(s) (21) and a clamping part (30).

2. Device according to claim 1, **characterised in that** said chassis (6) is a rectangular parallelepiped assembly of several frames (7, 10, 15).

3. Device according to claim 2, **characterised in that** said chassis (6) comprises a first frame (7) comprising two posts (8, 8') and an upper cross-member (9), said first frame (7) not comprising a lower cross-member and being connected to a second frame (10) that also does not comprise a lower cross-member, said second frame (10) comprises an upper cross-member (11) and two lateral posts (12, 12'), said frames (7, 10) being connected together by a pair of upper beams (13, 13') and a pair of lower beams (14, 14').

4. Device according to claim 3, **characterised in that** said chassis (6) comprises a frame (15) located at the rear of said frames (7, 10), not comprising a lower cross-member and provided with an upper cross-member (16) and two lateral posts (17, 17'), said upper cross-members (10, 16) being connected together by straight beams (18 and 18').

5. Device according to any of claims 1 to 4 **characterised in that** said clamping part (30) is comprised of a plate (31) surmounted with a hollow U-shaped profile (32), the length of the plate (31) is such that the hold is optimal and sufficient on the horizontal section of the elements of the supporting structure and **in that** the clamping part (30) is pierced with vertical screw holes of which the dimensions and the spacing coincide with those made in the additional lower cross-members (21) of the chassis (6).

6. Device according to any of claims 1 to 5 **characterised in that** the chassis (6) is provided with means for facilitating the insertion of the chassis-monitor unit on the elements (2) of the supporting structure of the control unit, said means for facilitating consisting in pads (20) made of a plastic organic polymer material, for example PVC, said pads (20) are placed under the lower beams (14, 14', 26) of the chassis or under the straight Z-shaped brackets (19, 19') fastened under these same lower beams (14, 14', 26).

7. Device according to any of claims 1 to 6 **characterised in that** the means for connecting a monitor (1) with cathode ray tube to the chassis (6) comprise support profiles (23) supporting the lower face of the cases of the monitor (1) and fastening profiles (23') intended laterally fix the monitor (1) to the chassis (6).

8. Device according to any of claims 1 to 6 **characterised in that** the means for connecting to the chassis (6) of a monitor (1) with liquid crystal or plasma display comprise a U-shaped profile (29) of which the lateral branches are perpendicular to the median segment, the latter intended to be screwed to the centre of the rear plate of the monitor and each of the lateral branches intended to be fixed to an additional lateral post (27) of the chassis (6).

9. Device according to any of claims 1 to 8 **characterised in that** the chassis receives in addition to the monitor, electronic adaptation devices.

## Patentansprüche

1. Vorrichtung zum Integrieren von Monitoren (1) in bestehende Tragstrukturen von Pulten oder Tafeln von Kontroll- oder Steuerzentralen, **dadurch gekennzeichnet, dass** sie aus einem röhrenförmigen Zwischengestell (6) in einer insgesamt rechteckigen Quaderform besteht, das mit Mitteln zum Verbinden eines Monitors (1) mit dem Gestell (6) und mit Mitteln zum Befestigen an der Tragstruktur versehen ist, wobei die erstgenannten die feste Verbindung des Monitors sicherstellen und die zweitgenannten eine Bewegung und ein Fallrisiko der fest verbundenen Gestell-Monitor-Einheit vermeiden, wobei das Gestell mindestens eine zusätzliche untere Querstrebe (21) umfasst, die mindestens zwei senkrechte Schraubendurchgänge (22) für die Befestigung des Gestells (6) an der Tragstruktur umfasst, und dass die Befestigungsmittel Mittel zum Einklemmen der Elemente der Tragstruktur sind, wobei dieses Einklemmen zwischen der oder den zusätzlichen unteren Querstrebe(n) (21) und einem Klemmteil (30) erfolgt.

2. Vorrichtung nach Anspruch 1, **dadurch gekennzeichnet, dass** das Gestell (6) ein rechteckiger quaderförmiger Verband von mehreren Rahmen (7, 10, 15) ist.

3. Vorrichtung nach Anspruch 2, **dadurch gekennzeichnet, dass** das Gestell (6) einen ersten Rahmen (7) umfasst, der zwei Stützen (8, 8') und eine obere Querstrebe (9) umfasst, wobei der erste Rahmen (7) keine untere Querstrebe umfasst und mit einem zweiten Rahmen (10) verbunden ist, der ebenfalls keine untere Querstrebe umfasst, wobei der zweite Rahmen (10) eine obere Querstrebe (11) und zwei seitliche Stützen (12, 12') umfasst, wobei die Rahmen (7, 10) über ein Paar obere Längsstreben (13, 13') und ein Paar untere Längsstreben (14, 14') miteinander verbunden sind.

4. Vorrichtung nach Anspruch 3, **dadurch gekennzeichnet, dass** das Gestell (6) einen Rahmen (15) umfasst, der sich hinten an den Rahmen (7, 10) befindet und keine untere Querstrebe umfasst und mit einer oberen Querstrebe (16) und mit zwei seitlichen Stützen (17, 17') versehen ist, wobei die oberen Querstreben (10, 16) untereinander über gerade Längsstreben (18 und 18') verbunden sind.

5. Vorrichtung nach einem der Ansprüche 1 bis 4, **dadurch gekennzeichnet, dass** das Klemmteil (30) aus einer Platte (31) besteht, über der ein hohles U-Profil (32) liegt, wobei die Länge der Platte (31) derart ist, dass ein optimaler und ausreichender Halt an dem waagerechten Teilstück der Elemente der Tragstruktur gegeben ist, und dass das Klemmteil (30) mit senkrechten Schraubendurchgängen versehen ist, deren Abmessungen und Beabstandung mit denen übereinstimmen, die in den zusätzlichen unteren Querstreben (21) des Gestells (6) angebracht sind.

6. Vorrichtung nach einem der Ansprüche 1 bis 5, **dadurch gekennzeichnet, dass** das Gestell (6) mit Mitteln zum Erleichtern des Einschiebens der Gestell-Monitor-Einheit auf die Elemente (2) der Tragstruktur der Kontroll- oder Steuereinheit umfasst, wobei die Erleichterungsmittel aus Kufen (20) aus polymerem organischem Kunststoff, z.B. PVC, bestehen, wobei diese Kufen (20) unter den unteren Längsstreben (14, 14', 26) des Gestells oder unter den geradlinigen Z-förmigen Winkeleisen (19, 19') angeordnet sind, die unter eben diesen unteren Längsstreben (14, 14', 26) befestigt sind.

7. Vorrichtung nach einem der Ansprüche 1 bis 6, **dadurch gekennzeichnet, dass** die Mittel zum Verbinden eines Kathodenröhrenbildschirms (1) mit dem Gestell (6) Tragprofile (23), welche die untere Seite der Gehäuse des Monitors (1) abstützen, und Befestigungsprofile (23'), die dazu gedacht sind, den Monitor (1) seitlich am Gestell (6) zu sichern, umfassen.

8. Vorrichtung nach einem der Ansprüche 1 bis 6, **dadurch gekennzeichnet, dass** die Mittel zum Verbinden eines Flüssigkristall- oder Plasmabildschirms (1) mit dem Gestell (6) aus einem U-förmigen Profil (29) bestehen, dessen Seitenschenkel zum mittleren Segment rechtwinklig sind, wobei letzteres dazu gedacht ist, in der Mitte der Rückplatte des Monitors angeschraubt zu werden, und jeder der Seitenschenkel dazu gedacht ist, an einer zusätzlichen Seitenstütze (27) des Gestells (6) gesichert zu werden.

9. Vorrichtung nach einem der Ansprüche 1 bis 8, **dadurch gekennzeichnet, dass** das Gestell zusätzlich zum Monitor elektronische Anpassungsvorrichtungen aufnimmt.
